# EUROPEAN PATENT APPLICATION

(11) **EP 4 589 198 A1**
(43) Date of publication of application: **23.07.2025**
(21) Application number: 24152845.4
(22) Date of filing: 19.01.2024
(51) Int. Cl.: F24C 7/00, F21S 10/04

(54) **A DEVICE FOR MIMICKING A FIREPLACE AND A METHOD FOR DISPLAYING AN ARTIFICIAL FIRE**

(71) Applicant: iQontrol B.V., 6653 BN Deest (NL)
(72) Inventor: Teunissen, Kevin Egidius Hendricus, 6653 BN Deest (NL)
(74) Representative: 't Jong, Bastiaan Jacob

(57) **Abstract**

The present invention relates to a device for mimicking a fireplace by displaying an artificial fire pattern, comprising:
- a housing (2) enclosing an interior compartment (3) and comprising at least one opening (4) allowing the interior compartment(3) to be viewed from a viewpoint (5) outside the housing (2); and
- a first display device (6) arranged within the housing (2) and configured to display a first video of for example flames, wherein the first display device (6) is an emissive transparent display such as an electroluminescent display visible from the viewpoint (5) outside the housing.

The present invention further relates to a method for displaying an artificial fire with a device for mimicking a fireplace according to the invention, wherein at least the first video is AI generated.

## Description

The present invention relates to a device for mimicking a fireplace by displaying an artificial fire pattern, comprising:
- a housing enclosing an interior compartment and comprising at least one opening allowing the interior compartment to be viewed from a viewpoint outside the housing; and
- a first display device arranged within the housing and configured to display a first video of for example flames device for mimicking a fireplace by displaying an artificial fire pattern.

The present invention further relates to a method for displaying an artificial fire with a device for mimicking a fireplace according to the invention.

Devices for mimicking a fireplace are known, also called artificial fireplaces. These devices are beneficial for not requiring chimneys or further adaptations to a building. Furthermore, since there is no significant heat-contribution to the building in which such a device is placed, artificial fireplaces can also be deployed in modern well insulated buildings. Normal wood fireplaces typically can not be used for extended periods in such buildings, due to the high energetic output.

A drawback of known devices is that the simulated fire is far from realistic, because the artificial fire video lacks any sort of perceived depth with respect to the fireplace.

In order to enhance the realism, sometimes an optical illusion is applied where a semi-transparent mirror is used to superimpose the video over the contents of the artificial fireplace. This effect is often referred to as the Pepper's ghost illusion. This however requires more space for the optical path of the reflected image. Furthermore, the area behind the mirror is darkened substantially by the mirror, providing an unrealistic rendering of the internals of the artificial fireplace. The mirror is also often clearly visible when there is no light behind it, for example when the artificial fireplace is turned off.

It is therefore an object of the present invention to reduce or even obviate the above-mentioned drawbacks.

This object is achieved according to the invention by providing a device according to the preamble, characterized in that the first display device is an emissive transparent display such as an electroluminescent display visible from the viewpoint outside the housing.

By using an emissive transparent display, a very realistic depth illusion can be obtained. Such a see-through display allows the interior compartment to be viewed almost entirely unrestricted. A transparent display does not darken the view like a semi-transparent mirror does. A display is at least considered to be transparent according to the invention when minimally 50% of the light falling on it is transmitted through it, preferably more than 70% of the light is transmitted.

Because the display is emissive, the light effect is additive to any light available within the interior compartment, such as from for example light effects used for lighting props arranged within the interior compartment. The additive effect is thus not obtained by an indirect optical path through intermediary reflective optical elements such as a mirror, but by directly looking through the transparent display device. Emissive displays can be based on for example LED (Light-Emitting Diode), OLED (Organic Light-Emitting Diode), or other variants thereof. Typically pixels in emissive displays do not emit light when not powered, allowing an almost entirely unobstructed view through the transparent pixel.

In an embodiment of a device according to the invention, the device further comprises a second display device arranged within the interior compartment and configured to display a second video of for example flames, wherein at least part of the second display device is visible through the first display device from the viewpoint outside the housing for obtaining a combined and at least partly superimposed view of the first and second video.

By employing a second display device, a further perceived depth can be obtained due to both videos, when observed from the viewpoint, providing a layered effect where the second video originates from deeper within the interior compartment because from the viewpoint the videos overlap where the second display device is visible through the first display device.

A preferred embodiment of the device according to the invention further comprises an artificial fireplace element such as for example a wooden log or an imitation thereof, arranged in the interior compartment between the first and the second display device.

While it is customary to include some form of artificial fireplace element, such as wooden logs, coal, ash or a combination and/or stack thereof, such elements are typically not arranged between the first and the second display device, where at least the first display device is a transparent emissive display. By arranging the artificial fireplace element between the displays, a further layering is obtained allowing for further perceived depth in the artificial fire.

In another embodiment of a device according to the invention, the second display device is arranged at and/or forms a boundary, such as for example a rear wall, of the interior compartment opposite at least one opening.

By arranging the second display device at a boundary of the interior compartment opposite at least one opening, the maximum perceived depth of the artificial fire can be obtained, because the second video emanates from as large a distance as possible from the corresponding opening. The second display can optionally form a boundary of the interior compartment of the housing.

In yet another embodiment of a device according to the invention, the second display device is curved and extends across and/or forms at least two adjacent boundaries, such as, for example, a rear wall and a side wall, of the interior compartment.

When the second display extends across at least two adjacent bounding surfaces forming boundaries of the interior compartment, such as a rear wall and a side wall, a depth effect can then be obtained from more viewpoints. By curving the second display across the boundaries, furthermore visible transitions between the boundaries are prevented. Preferably, the bounding surfaces across which the second display extends are adjacent surfaces in the horizontal direction. The increased horizontal viewpoints that can be supported by such an arrangement is more important than vertical extension.

Also according to the invention, is an embodiment of a device according to the invention wherein the second display device is an emissive transparent display such as an electroluminescent display.

When the second display is also emissive and transparent, even further layering can be obtained. The second display can in some cases also allow the interior compartment to be viewed from another viewpoint.

In another embodiment of a device according to the invention, the first display device, or at least its perimeter, is substantially aligned parallel to, and preferably positioned adjacent to, at least one opening.

By aligning the perimeter of the first display device parallel to the at least one opening, the depth illusion of the first video can be increased, by ensuring a full overlap of the first display with the interior compartment. The first display can then furthermore project apparent reflections on the interior compartment up until the opening. If the first display is not flat, then at least the perimeter should be aligned parallel to, and preferably positioned adjacent to the opening, to allow the first video to be seen near to the opening.

Also an embodiment of a device according to the invention is a device wherein the first display device, or at least its perimeter, is positioned angled with respect to the second display device.

By angling the first and second display devices with respect to each other, whereby preferably at least the first display is angled with respect to the vertical, the first display can provide a further sense of depth. The first display can be angled between 5° and 75° backwards, preferably between 40° and 50° backwards, preferably approximately 45° backwards. Preferably the second display is during use substantially upright. If the first display is not flat, then at least the perimeter should be positioned angled with respect to the second display device.

In another preferred embodiment of a device according to the invention, the first display device is curved, preferably curved towards the second display device.

By curving the first display device, more freedom is obtained in which parts of the display device overlap from a viewpoint outside the housing. When the first display device is curved towards the second display device, the alignment of the first video with the other elements inside the interior compartment is better from more viewpoints, due to a decreased distance between both display devices.

Also a preferred embodiment of a device according to the invention, is a device wherein at least the first display device, preferably all display devices, comprise a first mode in which the opacity of the display device is lower than in a second mode.

By supporting two modes of a display device employed in the device, wherein the opacity of the respective display device can be varied between both modes, the display device can be switched to the first mode for increasing the contrast of the display device and hiding or at least from the viewpoint partly obscuring elements placed behind the display device. This allows for more variation in use of the device, such as a more dramatic depiction of flames over the artificial wood logs or displaying an entirely different artificial scene such as an aquarium.

The two modes can for example be obtained by employing a privacy or smart film layer, such as a Polymer-Dispersed Liquid Crystal (PDLC) film, behind the emissive transparent display as seen from the viewpoint. The opacity of such a film layer can then be varied by electronic activation of the film layer.

In yet another embodiment of a device according to the invention, the second mode is achieved by an at least partly opaque, preferably fully opaque film arranged behind the display device, which film is displaceable between a first position corresponding with the first mode, in which the film overlaps with the display device and a second position corresponding with the second mode in which the film does not overlap with the display device.

Another embodiment of a device according to the invention, is a device further comprising a sensor, such a for example a radar sensor, for detecting an actual viewpoint of a subject near the device, and a controller configured for adapting at least one of the videos for obtaining a better alignment from the viewpoint of the at least one video with arrangement within the interior compartment.

By incorporating an actual viewpoint in the relative alignment of a video with respect to the elements in the interior compartment, the illusion of an actual fire in the device can further be increased. When for example multiple subjects are detected, the video can also be adapted not to show effects which are only convincing from a single viewpoint. Optionally and as equipped, the sensor may furthermore provide measurements on further aspects of a detected subject near the device, such as for example physical aspects like heartbeat, breathing-rhythms or activity-level. The further aspects can then be incorporated in adapting at least one of the videos for obtaining an illusion of a fire reactive to said aspects.

In yet another embodiment of a device according to the invention, the device further comprises an infrared heating source arranged to radiate through at least one opening, such as a transparent infrared heating panel placed in the at least one opening or an optically transparent heat mirror projecting the radiation through the at least one opening.

By including a radiant heat source radiating from the opening, the illusion of fire can be enhanced even further. The heat source can for example be a transparent infrared heating panel, or the heat can be projected through the opening by means of a hot mirror which is transparent to the visible spectrum. Preferably the radiant heat source does not emit in the visible spectrum.

The present invention further relates to a method for displaying an artificial fire with a device for mimicking a fireplace according to the invention, wherein at least the first video is AI generated.

The first or any other video displayed by a display device within the device can be generated using AI to ensure variability within the videos. This allows for the video to remain entertaining to watch as well as for potentially infinite variability based on the parameters available, such as for example the location of the artificial fire elements or other elements within the interior compartment.

These and other features of the invention are further elucidated with reference to the accompanying drawings.
Figure 1 shows a schematic cross section in side view of a first embodiment of a device according to the invention.
Figure 2 shows a schematic cross section in side view of a second embodiment of a device according to the invention.
Figure 3 shows a schematic cross section in top view of a third embodiment of a device according to the invention.
Figure 4 shows a schematic cross section in top view of a fourth embodiment of a device according to the invention.

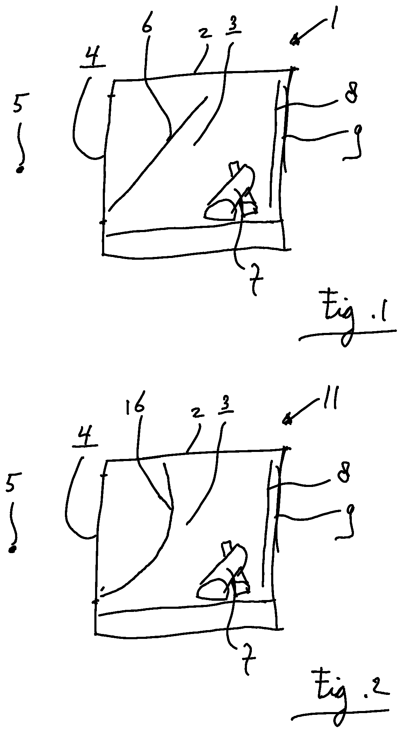

In figure 1 a schematic cross section of a first embodiment 1 of a device according to the invention is shown. The housing 2 encloses an interior compartment 3. An opening 4 allows the interior compartment 3 to be viewed from a viewpoint 5 outside the housing 2. A first display device 6 is arranged within the housing 2 and configured to display a first video of flames, visible from the viewpoint 5. Because the first display device 6 is an emissive transparent display, the artificial fireplace element 7 can be seen through the first display device 6. Behind the artificial fireplace element 7, a second display device 8 is arranged at the rear wall 9. While schematically depicted at a slight distance from the rear wall 9, the second display device 8 may actually be attached directly to it, or even form the rear wall 9 as well. The rear wall 9 forms the boundary of the interior compartment 3 opposite the opening 4.

Optionally, the first display device 6 can be placed within the opening 4.

In figure 2 a schematic cross section of a second embodiment 11 of a device according to the invention is shown, wherein the first display device 16 is curved towards the second display device 9. For like elements, like reference numerals are used as in figure 1.

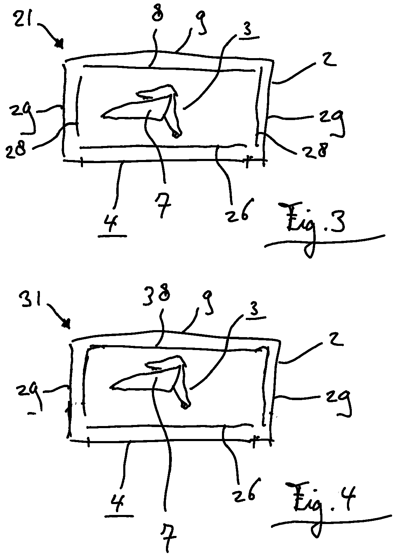

In figure 3 a schematic cross section in top view of a third embodiment 21 of a device according to the invention is shown. The first display device 26 is arranged parallel to and near the opening 4. The second display device 8 is arranged at the rear wall 9. The rear wall 9 forms the boundary of the interior compartment 3 opposite the opening 4. Further optional display devices 28 are arranged at the respective side walls 29. The side walls 29 form the boundary of the interior compartment 3 on the sides. As a further option, both the side walls 29 as well as the rear wall 9 can comprise an opening for viewing into the interior compartment 3.

In figure 4 a schematic cross section in top view of a fourth embodiment 31 of a device according to the invention is shown. The second display device 38 is arranged at the rear wall 9. The second display device 38 is curved and extends across two adjacent boundaries formed by the side walls 29.

## Claims

1. A device for mimicking a fireplace by displaying an artificial fire pattern, comprising:
- a housing enclosing an interior compartment and comprising at least one opening allowing the interior compartment to be viewed from a viewpoint outside the housing; and
- a first display device arranged within the housing and configured to display a first video of for example flames,
**characterized in that** the first display device is an emissive transparent display such as an electroluminescent display visible from the viewpoint outside the housing.

2. Device according to claim 1, further comprising a second display device arranged within the interior compartment and configured to display a second video of for example flames, wherein at least part of the second display device is visible through the first display device from the viewpoint outside the housing for obtaining a combined and at least partly superimposed view of the first and second video.

3. Device according to claim 2, further comprising an artificial fireplace element such as for example a wooden log or an imitation thereof, arranged in the interior compartment between the first and the second display device.

4. Device according to claim 2 or 3, wherein the second display device is arranged at and/or forms a boundary, such as, for example, a rear wall, of the interior compartment opposite at least one opening.

5. Device according to claim 4, wherein the second display device is curved and extends across and/or forms at least two adjacent boundaries, such as, for example, a rear wall and a side wall, of the interior compartment.

6. Device according to any one of the preceding claims, wherein the second display device is an emissive transparent display such as an electroluminescent display.

7. Device according to any one of the preceding claims, wherein the first display device, or at least its perimeter, is substantially aligned parallel to, and preferably positioned adjacent to, at least one opening.

8. Device according to any one of the preceding claims, wherein the first display device, or at least its perimeter, is positioned angled with respect to the second display device.

9. Device according to any one of the preceding claims, wherein the first display device is curved, preferably curved towards the second display device.

10. Device according to any one of the preceding claims, wherein at least the first display device, preferably all display devices, comprise a first mode in which the opacity of the display device is lower than in a second mode.

11. Device according to claim 10, wherein the second mode is achieved by an at least partly opaque, preferably fully opaque film arranged behind the display device, which film is displaceable between a first position corresponding with the first mode, in which the film overlaps with the display device and a second position corresponding with the second mode in which the film does not overlap with the display device.

12. Device according to any one of the preceding claims, further comprising a sensor, such a for example a radar sensor, for detecting an actual viewpoint of a subject near the device, and a controller configured for adapting at least one of the videos for obtaining a better alignment from the viewpoint of the at least one video with arrangement within the interior compartment.

13. Device according to any one of the preceding claims, further comprising an infrared heating source arranged to radiate through at least one opening, such as a transparent infrared heating panel placed in the at least one opening or a visible-light transparent hot mirror projecting the radiation through the at least one opening.

14. A method for displaying an artificial fire in a device according to any one of the preceding claims, wherein at least the first video is AI generated.
